# EUROPEAN PATENT APPLICATION

(11) **EP 1 705 862 A1**
(43) Date of publication of application: **27.09.2006**
(21) Application number: 06076082.4
(22) Date of filing: 28.05.1999
(51) Int. Cl.: H04L 29/06, H04L 9/08, H04L 12/22

(54) **Secure distribution system for digital contents**

(30) Priority: 24.09.1998 KR 98390000808; 24.09.1998 KR 98390000809
(62) Divisional of application: 99304161.5
(71) Applicant: Samsung Electronics Co., Ltd., Suwon-si, Gyeonggi-Do (KR)
(72) Inventor: Kang, Eun-Seong, Seocho-gu Seoul (KR); Byun, Jin Young, Kangnam-gu Seoul (KR)
(74) Representative: Robinson, Ian Michael

(57) **Abstract**

A digital cryptograph and encryption process encrypts and transmits in a digital format specific items of information requested by a user of a digital content transmission system by using key information, a user's key and a content encryption key, to decrypt and replay the encrypted digital information at the user's terminal by using the key information and the user's authorization information. Each registered subscribing user is provided with unique key information. The user key is generated by applying the key information to a key generation algorithm. The content encryption key that is created when the registered user accesses the server, is encrypted with the user key. The digital information is encrypted by using the content encryption key in an encryption algorithm. The decryption algorithm allows the user to decrypt and replay the encrypted digital information upon receipt of the key information that has a one-to-one correspondence to the identity characters of the registered subscribing user.

## Description

The present invention is generally related to encryption processes and apparatus, and, more particularly, to processes and apparatus for the generation and use of keys in the transmission and replay of digital information.

Recently, with the flood of information provided by various media such as broadcasting and press, an atmosphere has been created by the information providers who are interested in providing integrated information that covers all of the media. Other users want to selectively receive a specific item of digital information from the entire spectrum of information available from a particular information provider (IP). Accordingly, a digital content transmission system has been formed by the information providers who convert various types of information into digital form and store this digital information and store information about the users who subscribe to this digital information system from an information provider via the network. Digital information transmission systems endow an application program with easy download ability of the digital content. The user can get all the information desired by using this application program to access the digital information system through the network.

The digital information may be provided to the user either by payment or for free. In case of paid digital information, the server that provides the digital information via the transmission system sets the service fee. The service server charges the user according to the quantity of information requested when the digital information is downloaded to the user. The MPEG software protocol, for example, compresses audio files to a fraction of their original size, but it has little perceptible affect upon the quality of the audio sound. The MPEG software protocol is now used widely by Internet sites to offer digitalized music, and is reported to be used commonly to transmit digitalized versions of recorded music without the consent of the musicians. When a user is connected to a server that provides digital information commercially via a network, a few of the users may be able inadvertently or illegally to copy the digital information, a practice that is economically damaging to both the musicians who performed the music and to the providers of the server that runs the digital information transmission system, as was recently noted by Interdeposit and the French Agency for the Protection of Programs, a member of the European Association of Authors and Information Technology Professional, in the Patent, Trademark & Copyright Journal, volume 57, No.1416, page 385 (11 March 1999). Currently, the providers and the musicians can do little more than seek legal redress by undertaking civil and criminal action in an effort to control unlicensed transmission reception of digital information. Thus, a need exists for a technique to preserve transmission security of revenue bearing digital information, while restricting access to the information by unauthorized entities and preventing unauthorized users from using any information that they may illegally obtain from an information provider. This is performed by restricting the ability of unauthorized users to decrypt whatever information they manage to obtain via the system.

It is therefore, one aim of embodiments of the present invention to provide improvements in a secure distribution system for digital contents.

It is another aim to provide digital encryption processes and apparatus, able to encrypt and transmit digital information received from a transmission system, by the use of multiple cryptographic keys.

It is still another aim to provide digital encryption processes and apparatus for generating and using multiple cryptographic keys during the transmission of digital information to a user.

It is yet another aim to provide a digital encryption process and apparatus that employs user information in the generation and use of multiple cryptographic keys during the transmission of digital information to the user.

It is still yet another aim to provide a digital encryption process and apparatus able to encrypt and transmit digital information obtained from a transmission system by using multiple cryptographic keys, and to decrypt and play the digital information at the terminal of the user by using a plurality of keys, one of which is common to the multiple keys.

It is a further aim to provide a digital encryption process and apparatus able to encrypt and transmit digital information obtained from a transmission system by using key information, a userkey, and a content encryption key, and to decrypt and play the digital information at the terminal of the user by using the key information and user authorization information.

It is a still further aim to provide encryption, transmission, and reception protocols, enabling encryption, transmission, and decryption of digital information received from a transmission system.

It is a yet further aim to provide encryption transmission, and reception protocols, enabling encryption and transmission of digital information received from a transmission system by using multiple keys to encrypt the digital information, and to decrypt and replay the digital information at the terminal of the *user* by using a plurality of keys, one of which is common to the multiple keys.

It is a still yet further aim to provide encryption, transmission, and reception protocols, enabling encryption and transmission of digital information received from a transmission system, by using key information, a user's key and a content encryption key, and to decrypt and replay the digital information at the terminal of the user by using the key information and user authorization information.

It is also an aim to provide a more secure cryptograph and process for transmitting information to a terminal of a user that has requested the information.

It is also a further aim to provide a process that reliably restricts the ability of a registered subscriber, that has validly obtained information from an information provider, to deliver that information to another entity in a readily usable form.

These and other aims of embodiments of the invention may be attained with an encryption process and apparatus that enables a user to request the transmission of digital information to the user's terminal unit. Prior to the transmission of the requested items, however, the user must register user membership information, that includes the user's identity characters, with the server that controls the transmission of the digital information. The server generates encryption key information in correspondence with the user's identity characters, received from the terminal unit. The server furnishes, and the terminal unit downloads and stores, the encryption key information received by the terminal unit in response to the request by a user for the digital information. The server encrypts the digital information with the encryption key information, and the terminal unit decrypts the digital information received from the server by using a decryption algorithm in conjunction with the encryption information and replays the decrypted information.

One embodiment of the present invention contemplates a protocol format to maintain copyright protection of the digital information with a header field and an encrypted digital information field. The server uses a protocol format generator that generates the copyright protection protocol format and a user's key for encrypting a content encryption key using a key generation algorithm that corresponds to the identity characters of the user. The protocol format generator generates a protection protocol header format by using the user's key, which generates a content encryption key. The protocol format generator adds to the header encrypted digital information that has been encrypted with the use of the content encryption key in order to form the copyright protection protocol format. The terminal unit uses the key information and a decryption algorithm to decrypt the user's key and the content encryption key, and it decrypts the copyright protection protocol format by using the content encryption key.

According to an aspect of the invention there is provided an apparatus for encrypting and decrypting a digital content, comprising: a terminal unit having a decryption algorithm, for transmitting identity characters of a user, for receiving and storing a key information, for receiving a protocol including a encrypted digital content, and decrypting said protocol by using said decryption algorithm and said key information; and a service server having an encryption algorithm, for generating said key information corresponding to said identity characters transmitted from said terminal unit, for transmitting said key information to said terminal unit, for encrypting said digital content by using said key information and said encryption algorithm, and transmitting said protocol including said encrypted digital content and a header to said terminal unit.

According to a second aspect of the invention, there is provided an apparatus for encrypting and decrypting a digital content, comprising: a terminal unit having a decryption algorithm, for transmitting identity characters of a user, for receiving and storing key information, for receiving a protocol including a encrypted digital content, and decrypting said protocol by using said decryption algorithm and said key information; a service server having an encryption algorithm, said service server transmitting said key information to said terminal unit, for encrypting said digital content by using said key information and said encryption algorithm, and for transmitting said protocol to said terminal unit; and a host server corresponding to said identity characters transmitted from said service server for generating said key information, for transmitting said key information to said service server, and for storing said key information with said identity characters.

Said terminal unit may further comprise: a user key generated by said key information and a key generation algorithm; and a content encryption key decrypted by said user key, for decrypting said encrypted digital content.

Said terminal unit may further comprise: a first interface for receiving said key information; a user authority identifier for identifying whether said user is authorized, a first hash value of said user key with a second hash value of user authorization information header of said protocol, for generating said user key using said key information; means for decrypting content encryption key by using said user key; and means for decrypting said encrypted digital content by using said content encryption key.

Said service server may further comprise: a user key generated by said key information and a key generation algorithm; and a content encryption key generated in response to user's request and encrypted by said user key, for encrypting said digital content.

Said service server may further comprise: a second interface for receiving said identity characters input from said terminal unit; key information generator responding to said identity characters for generating said key information; a user key generator responding to said key information for generating said user key; a content encryption key generator responding to user's access to said service server for generating said content encryption key; a user authorization information generator responding to said user key for encrypting said content encryption key to generate a user authorization information; a header generator responding to said user key for generating a header, wherein said header includes said user authorization information; and a protocol format generator for adding said encrypted digital content to said header to generate said protocol.

The apparatus preferably further comprises a service sanction agent server connected to said service server for receiving from the service server a signal concerning digital content fee responding to the transmission of said digital content requested by said user, and accumulating said digital content fees responding to said signal into a registered user's ID.

The terminal unit having a network access program may be connected to a network, public switched telephone network, or a wireless network.

Said protocol preferably includes a header and said encrypted digital content.

Said protocol is preferably a copyright protection protocol.

Preferably, said host server further comprises: key information generator corresponding to the identity characters input from said second interface for generating said key information.

Said terminal unit is preferably connected to a network, public switched telephone network, or wireless network, said terminal unit having a network access program to access said service server.

According to another aspect of the invention there is provided a protocol format apparatus, comprising: a protocol format encoder for encoding a header and a digital content to a copyright protection protocol, wherein said header includes information relating to decrypting and explaining said digital content; and a protocol format decoder for decoding said protocol and for decrypting said digital content according to said information of said header received from said protocol format encoder.

Preferably, said protocol format encoder generates a user key by using a key information and a key generation algorithm, calculates a hash value by applying said user key to a hash algorithm, and encrypts a content encryption key by using said user key, said header including a user authorization information with said hash value and said encrypted content encryption key.

Preferably, said protocol format decoder generates a user key by applying a key information to a key generation algorithm, decrypts a content encryption key by using the user key, and decrypts said encrypted digital content by using said content encryption key.

According to a fourth aspect of the invention, there is provided a protocol format decoder for copyright protection having a decryption algorithm, comprising: means for receiving a copyright protection protocol including an encrypted digital content; and means for decrypting said copyright protection protocol by using said decryption algorithm and a key information to replay said encrypted digital content.

Preferably, said protocol format decoder generates a user key by applying key information to key generation algorithm and decrypts a content encryption key from user authorization information included in said copyright protection protocol by using said user key and said encrypted digital content by using said temporary validation key.

According to a fifth aspect of the invention, there is provided a protocol for protecting copyright, comprising: an encrypted digital content; and a header having information for decrypting said encrypted digital content.

Preferably, said header includes a field for indicating a *size* of said encrypted digital content, and an additional information field.

Preferably, said header includes a copyright support field for indicating whether said digital content are under copyright protection, a non-encrypted header field and an encrypted header field.

Said header may include a field for indicating a size of the non-encrypted header field, and a field for indicating said size of said encrypted header field.

Said header may include a copyright library version field, a digital content conversion format field, a key generation algorithm field, a digital content encryption algorithm field, a field for indicating a user authorization information, and a field for indicating said user authorization information for a replaying device.

Said field may include a field for indicating a hash value of said user key, and a field for indicating said size of said hash value generated by hash algorithm, a field for indicating a resultant value of an encrypted content encryption key, and a field for indicating said size of said resultant value of said encrypted content encryption key.

Said non-encrypted header field may further comprise a copyright library version field, a digital content conversion format field, a field for indicating the code of a digital content provider, a key generation algorithm field, a digital content encryption algorithm field, a field for indicating the number of users sharing a PC, a field for indicating the number of users sharing a replaying device, a field for indicating user authorization information for said PC, and a field for indicating user authorization information for said replaying device.

Said encrypted header field may include a field for encryption algorithm of said digital content, a field for indicating a basic process unit of said digital content, a field for indicating the number of encrypted bytes, and a hash value field for a hash value for determining state of entire header.

According to another aspect of the invention, there is provided a method for encrypting digital content, comprising steps of: inputting identity characters of a user for registration; determining whether said user is registered; storing information of said identity characters of said user on membership registration when said user is determined to be unregistered; transmitting key information to said user; encrypting said digital content by using a content encryption key in response to a request signal from said user; and transmitting said encrypted digital content.

The method may further comprise the step of transmitting information relating to service fee to a service sanction agent server, said information being generated when said encrypted digital content is transmitted to said user.

A further aspect provides a method for generating user authorization information of digital content comprising steps of: receiving identity characters; comparing said received identity characters with stored identity characters to determine whether identical identity characters with said received identity characters exist among stored identity characters; generating key information when said received identity characters are determined not to exist; transmitting said key information to said service server; and storing said identity characters and said key information.

A still further aspect provides method for encrypting digital content, comprising steps of: receiving a request signal for digital content from a user; generating a user authorization information when said request signal is received; generating a header having information relating to said digital content and said user authorization information; encrypting said digital content; and transmitting a copyright protection protocol including said encrypted digital content and said header.

Said authorization information is preferably generated by using a key information relating to said user's identity characters.

Said step of generating said user authorization information preferably further comprises the steps of: generating a content encryption key in response to said received request signal; generating a user key by using a key information; and generating said user authorization information by using said content encryption key and said user key.

Said user authorization information preferably includes a hash value of said user indicating user's authorization.

According to another aspect of the invention, there is provided a method for generating a protocol format comprising steps of: receiving a user's request for digital content; generating, in response to said users request, first header by applying first digital content encryption algorithm, or second header by applying second digital content encryption algorithm when said first digital content encryption algorithm does not exist; encrypting said digital content; and adding said header to said digital content.

The method preferably, further comprises the steps of: determining whether additional information exists; generating an additional information field when the additional information is determined to exist; and adding said additional information field to said protocol format.

Said step of generating said header preferably further comprises steps of: generating a field for copyright support information and a field for indicating size of non-encrypted header information and then adding said fields to said header; and adding said non-encrypted header information field to said header.

Said step for generating said header preferably further comprises steps of: generating a user authorization information by using a key information and adding said user authorization information to said header; generating a header information relating to said encrypted digital content and encrypting said header information; and adding a field for said user authorization information and a field said encrypted header information; and a field for indicating a size of said encrypted header information to the header.

A still further aspect provides a method for decrypting an encrypted digital content comprising steps of: receiving copyright protection protocol having a header and digital content; comparing internally stored data with user authorization information included in said copyright protection protocol; and decrypting said encrypted digital content included in said copyright protection protocol when said internally stored data coincides with said user authorization information.

The method may further comprise the step of replaying said decrypted digital content.

Said internally stored data is preferably a key information relating to a user's identity characters.

Said user authorization information preferably includes a hash value of a user key generated by using a key information and an encrypted content encryption key including said protocol, and said hash value indicates user's authorization to enable said user to decrypt said encrypted digital content.

Preferably, a first hash value included in internally stored data generated by applying key information to key generation algorithm is compared to a second hash value generated from said user authorization information of said protocol.

The method may further comprise the steps of: decrypting a content encryption key included in said user authorization information; and decrypting an encrypted header included in said copyright protection protocol by using said decrypted content encryption key.

Said hash value is preferably served as a reference value for determination change of said header and is calculated by applying said head to hash algorithm.

According to another aspect of the invention, there is provide a method for receiving authorization to receive digital content from a service server, comprising steps of: requesting said service server for membership registration; receiving, from said service server, key information for authorization, corresponding to said membership registration; and storing said received key information.

Another aspect concerns a method for receiving authorization to receive digital content from a service server, comprising steps of: inputting and transmitting user's identity characters to said service server; receiving a key information for authorization, corresponding to said transmitted user's identity characters; and storing said received key information.

The method may further comprise the steps of: receiving encrypted digital content; and decrypting said encrypted digital content by using said key information.

Said key information is preferably transmitted to and stored in an external slave device.

According to a still further aspect, there is provided a replaying device, comprising: a memory for storing an algorithm for decrypting a protocol including encrypted digital content, and for storing key information and said protocol received from outside of said replaying device; a microcomputer for decrypting said protocol including said digital content by using said key information and said algorithm.

The device preferably further comprises a decoder for decoding said encrypted digital content to analog signal.

Said encrypted digital content is preferably an MPEG bit stream

Said microcomputer preferably generates a user key by using said key information, decrypts content encryption key included in user authorization information of a header of said protocol by using said user key, and decrypts said encrypted digital content by using said content encryption key.

Said microcomputer preferably outputs said digital content without decrypting said digital content when said received digital content is non-encrypted.

Another aspect provides a method for decrypting digital content in a replaying device, comprising steps of: receiving protocol comprising a header including user authorization information, and an encrypted digital content; and storing said protocol on a record medium.

The method may further comprise a step of decrypting and replaying said encrypted digital content stored in said record media.

Said user authorization information preferably comprises a hash value of a user key generated by key information, and an encrypted content encryption key.

Said record medium is preferably a flash memory.

A still further aspect concerns a method for decrypting digital content in a replaying device, comprising steps of: receiving encrypted digital content and a header having user authorization information; generating calculated data using internally stored data; comparing said calculated data with said user authorization information; decrypting said encrypted digital content when said calculated data and said user authorization information are determined to be identical; and replaying said decrypted digital content.

The method may further comprising the steps of: applying key information to key generation algorithm to calculate said calculated data; calculating first hash value by applying said calculated data to hash algorithm; determining whether said first hash value is identical to second hash value set in said user authorization information; decrypting a content encryption key included in said user authorization information; and decrypting an encrypted header included in copyright protection protocol by using said decrypted content encryption key.

Said internally stored data is preferably key information relating to user's identity characters.

According to another aspect, there is procided a method for decrypting digital content in a replaying device, comprising steps of: receiving key information and storing said key information on a record medium; receiving encrypted digital content and a header having user authorization information; generating a user key using said key information; comparing first hash value of first user key set in said received user authorization information and second hash value of said generated user key; and decrypting said encrypted digital content when said hash values are identical to each other.

A player is provided in accordance with another aspect, comprising: means for receiving authorization information; means for receiving and decoding a protocol format from outside of said player by using said authorization information; means for transmitting said decoded protocol format.

Said player may be a portable player, preferably a portable audio player.

The play may further comprise of means for storing an algorithm to decode said protocol format.

The player may further comprise of second decoder means for decoding said transmitted signal to an analog signal.

The player may further comprise a second decoder means for decoding said transmitted signal to an audio signal.

Said decoded signal is preferably an MPEG signal.

Said protocol format preferably includes an encrypted digital content.

Said protocol format may include a header having information for encrypted digital content.

Said protocol format preferably includes a non-encrypted digital content.

The player preferably further comprises: means for determinining whether first data in protocol format is identical to second data in authorization information; and means for allowing decoding means to applying algorithm to encrypted signal of said protocol format.

For a better understanding of the invention, and to show how embodiments of the same may be carried into effect, reference will now be made, by way of example, to the accompanying diagrammatic drawings in which:
Figure 1 is a schematic block diagram illustrating one embodiment of a digital cryptograph constructed according to the principles of the present invention;
Figure 2 is a schematic block diagram illustrating one embodiment of the terminal unit shown in Figure 1;
Figure 3 is a schematic block diagram illustrating another embodiment of the digital cryptograph shown in Figure 1;
Figure 4 is a schematic block diagram illustrating another embodiment of the terminal unit shown in Figure 1;
Figure 5 is a schematic block diagram illustrating greater detail of the embodiment of a digital cryptograph shown in Figure 1;
Figure 6 is a schematic block diagram illustrating greater detail of the embodiment of a digital cryptograph shown in Figure 3;
Figure 7 is a flow chart illustrating the operation of a service server as applied to the embodiment shown in Figure 3;
Figure 8 is a flow chart illustrating the operation of a host server as applied to the embodiment shown in Figure 3;
Figure 9 is a schematic block diagram illustrating the operational relation between the protocol format encoder and protocol format decoder in accordance with the principles of the present invention;
Figure 10 is an illustration of a protocol format as may be applied to the practice of the present invention;
Figure 11 is an illustration of another embodiment of a protocol format as may be applied to the practice of the present invention;
Figure 12 is an illustration of a header field that may be applied to the protocol formats shown in Figures 10 and in Figure 11;
Figure 13 is an illustration of another embodiment of a header field that may be applied to the protocol formats shown in Figures 10 and in Figure 11;
Figure 14 is an illustration of an unencrypted header field suitable for the header fields shown in Figures 12 and in Figure 13;
Figure 15 illustrates another embodiment of an unencrypted header field suitable for use as the header fields in Figures 12 and in Figure 13;
Figure 16 illustrates a format of user authorization information suitable for application to the unencrypted header field shown in Figures 14 and 15;
Figure 17 illustrates the details of a header field as may be used in the header fields shown in Figures 12 and 13;
Figure 18 illustrates a flow chart for an embodiment of one process of generating a protocol in the practice of the present invention;
Figure 19 illustrates a flow chart for an embodiment of one process of generating a header in the process shown by Figure 18;
Figure 20 illustrates a flow chart for one process of generating user authorization information in the process shown by Figure 19;
Figures 21A and 21B illustrate a flow chart for an embodiment of one process of decrypting and playing digital information in the practice of the present invention;
Figure 22 is a schematic block diagram illustrating one embodiment of a player suitable for broadcasting digital information transmitted by the embodiments shown by Figures 1 and 3; and
Figures 23A and 23B illustrate a flow chart for another process of decrypting digital information in the practice of the present invention.

Embodiments of the present invention contemplate the use of keys in order to encrypt and decrypt digital information such as recorded music and audio and video material. Embodiments of the present invention may use three keys in order to encrypt and decrypt the digital information.

User key information is generated in the host server at the request of the service server when a user has requested digital information and that user is unregistered with the host server. If a particular digital content transmission system combines the host server with the service server, the key information can also be generated by the service server. The user key information is used to generate a content encryption key for the encryption and decryption processes. Also, the user key information is used to ascertain whether the user is authorized to download and replay the encrypted digital information in the user's terminal unit. The user key information is preferably generated by using random numbers and makes a one-to-one correspondence that may be unique to the user. Once generated, the user key information is stored in a database of the host server with the user's characteristic information. The size of the user key information is preferably one hundred and twenty-eight bytes.

A user's key is used for encrypting and decrypting the content encryption key in the header. The user's key is generated by applying the user key information to a key generation algorithm, and the user's key is used for generating and confirming the user's authorization information. The user's authorization information includes a hash value that is generated by using the key information for use with the user key. When the hash value of the user's key is the same as the hash value in the user's authorization information in the header, the user is authorized to replay encrypted digital information.

In summary, the user's key is generated using user key information. The user's key is used to encrypt an outgoing content encryption key included among the user's authorization information in the header and to decrypt the encrypted incoming content encryption key, to decrypt and play the encrypted digital information. The hash value has the advantageous feature of always providing the same output from the same input without ever permitting the input to be inferred from the output.

The content encryption key is also used for encrypting a part of the digital information and the header. The key is preferably generated using random numbers and its size a multiple of eight bytes. In the practice of the present invention, the content encryption key is preferably eight bytes. One feature of the present invention is that two content encryption keys with the same content will not be generated. For example, the content encryption key may be generated according to the time when the user accesses the service server. Accordingly, the same user will receive different content encryption keys, with each of the content encryption keys corresponding to a different access time of the user. The content encryption key remains valid only while the user accesses the system and is invalid after the access.

In addition to algorithms for encrypting digital information supplied by an information provider, and algorithms enabling an authorized user to decrypt information obtained from the information provider, the present invention contemplates the use of a plurality of other algorithms. These algorithms include a key generation algorithm, a digital content encryption and decryption algorithm, and a hash algorithm.

The first of these algorithms, the key generation algorithm, generates the user's key by using the key information from the host server. In those systems where the host server is separate from service server, the key generation algorithm is included in the service server.

The second algorithm, the digital content encryption algorithm, is also included in the service server and is used by the service server to generate the header information to encrypt the digital information that has been requested by the user.

The third algorithm, the hash algorithm, is used to generate the user's authorization information by using the user's key in the service server, and is used to make a determination about whether the user is authorized to receive the digital information that the user has requested from the information provider via the system.

The digital information that is requested by the user is sometimes referred to in this specification as digital content. Briefly, the digital information is data, such as music or a literary composition, that has been convened into digital signals that are stored in a single file, with the aid of an application program for network communication. The user may select the digital information that has been stored in a file, and then access and read or listen to the digital information using a personal or laptop computer for replaying the digital information. The digital information includes all the information that has been converted into digital data by the information provider and stored in the form of a file, such as a magazine, a book, a dictionary, a drawing or illustration, as well as a song or other musical composition, sounds etc.

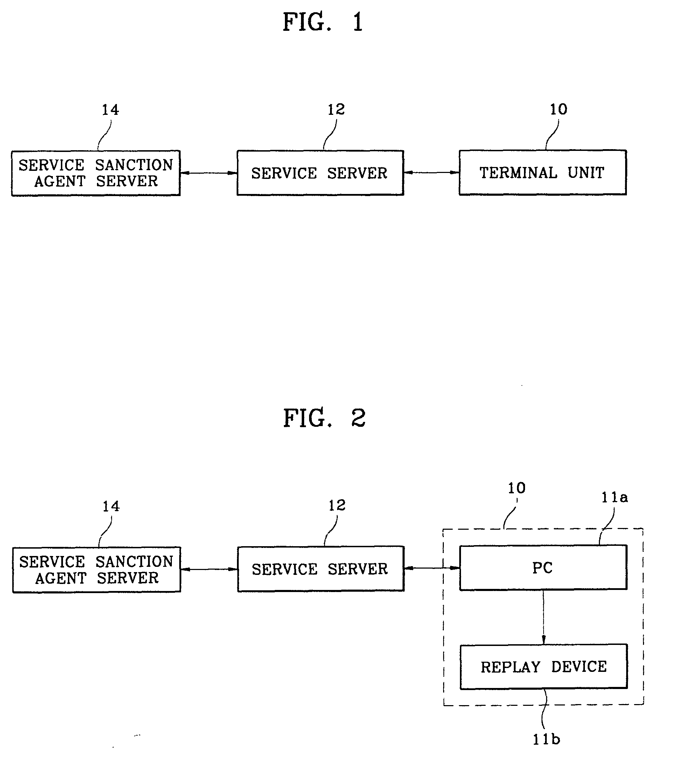

Figures 1 and 2 are schematic block diagrams showing one embodiment of the digital content encryption and decryption apparatus constructed according to the principles of the present invention. Terminal unit 10 transmits the user's identity characters and receives and stores the key information that is generated by service server 12 in correspondence with the identity characters furnished by the user's terminal unit 10. The key information is received from service server 12 along with the protocol and the encrypted digital information requested by the user. Terminal unit 10 decrypts and replays the digital information by using the stored key information and the decryption algorithm.

Service server 12 generates the header with the user's authorization information including the content encryption key that has been encrypted with the user's key. Service server 12 then adds the encrypted digital information to the header in order to generate the protocol for copyright protection. The protocol for copyright protection is transmitted to the user's terminal unit 10 through the network.

As illustrated by Figure 2, terminal unit 10 may be constructed with a personal computer PC 11a equipped with a conventional communication device and a peripheral or internal device 11b for replaying the digital information. Computer 11a and replay device 11b maybe provided with a plurality of decryption algorithms. Terminal unit 10 may be a personal computer (PC) or a laptop computer 11a connected to the Internet, or may be any kind of apparatus equipped with a communication program and communication device that enables connection with the Internet. Examples of communication devices that may be incorporated into computer 11a of terminal unit 10 are digital televisions, cellular telephones or web videophones. For example, when computer 11a is equipped with a network access program, terminal unit 10 may be connected to either a public switched telephone network or a wireless network.

PC 11a receives the key information from service server 12 and stores the key information in memory. PC 11a also receives the protocol that includes the encrypted digital information and stores the digital information in a long-term storage medium such as a hard disk (e.g., a HDD). Computer 11a also generates the user's key by using the stored key information, decrypts the content encryption key by using the generated user's key, and decrypts the encrypted digital information by using the decrypted content encryption key. As a result, the decrypted digital information may be replayed through either a video display or an audio device of computer 11a independently of any other internal or peripheral replaying device 11b.

Replay device 11b receives the key information and the encrypted digital content from PC 11a and decrypts the encrypted digital content by using the stored decryption algorithm. Replay device 11b may be either portable or stationary, depending upon its type of storage media.

Service server 12 generates key information that is based upon the identity characters of the user transmitted from terminal unit 10, stores the key information with the identity characters, and transmits the key information to computer 11a of terminal unit 10 when the user requests the key information. Service server 12 generates the content encryption key in response to the user's request, uses the user's key information to generate the user's key, and generates the user's authorization information from a content encryption key, encrypted using the user's key and the hash value of the user's key. Service server 12 also adds the digital information that has been encrypted by the encryption algorithm to the header containing the user's authorization information in order to form the copyright protection protocol, and then transmits the copyright protection protocol to terminal unit 10.

Service sanction agent server 14 receives a signal from service server 12 related to the digital information fees for downloading the digital content from service server 12, and charges the user by accumulating these fees for the registered user.

Preferred identity characters that define the user may be the user's social security number, the user's driver license number or the user's resident registration number, but any set of characters maybe used that tend to uniquely identify the user in the manner of the driver's license number.

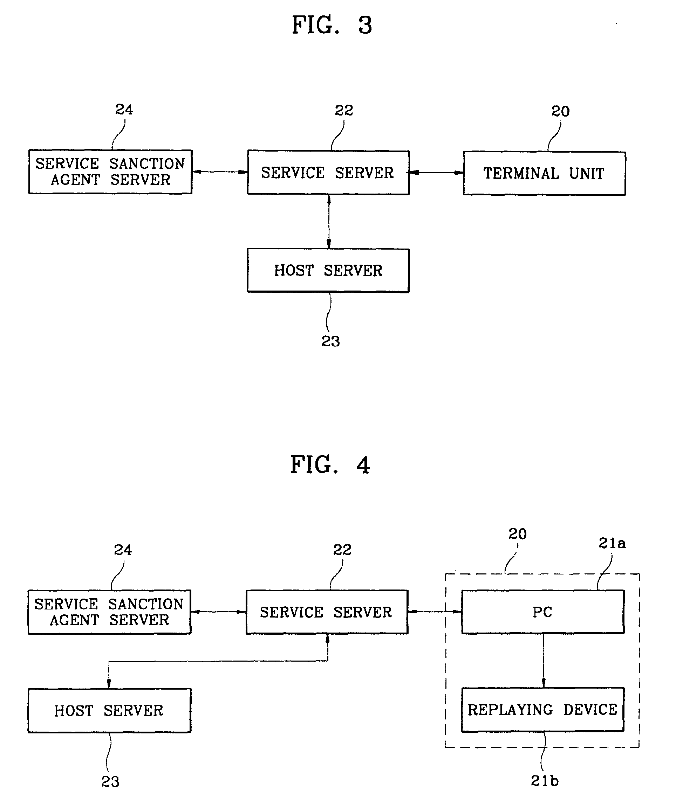

Figure 3 is a schematic block diagram showing another embodiment suitable for the practice of the present invention. The explanation related to terminal unit 20, replay device 21b and service sanction agent server 24 will be omitted because these components were described previously per the embodiments in Figures 1 and 2. Preferably, service server, host server and the terminal unit are implemented with microprocessor based computers and their attendant operating and data memories.

Service server 22 transmits to host server 23 a request signal that asks for key information that corresponds to the identity characters transmitted by the user from terminal unit 20. In response to reception of request signal, host server 23 transmits the key information to the service server, and the key information is then transmitted to terminal unit 20. Service server 22 also transmits the key information to terminal unit 20 in response to the user's request. Service server 22 generates a content encryption key in response to the user's request, uses the key information to generate the user key, and generates the user authorization information from the content encryption key encrypted by using the user's key and the hash value of the user's key. Service server 22 adds the digital information encrypted by the encryption algorithm to the header containing the user's authorization information in order to form the copyright protection protocol, and then transmits the copyright protection protocol to terminal unit 20.

The host server 23 generates the key information corresponding to the identity characters transmitted from service server 22 and stores the key information together with the identity characters, and then transmits the key information to service server 22 in response to the request signal generated by service server 22.

In the embodiments of Figures 1,2 and 3, service servers 12 and 22 may provide the user with a list or a menu of digital information that is available from the information provider via service servers 12, 22. This enables the user to easily select the digital information that the user wants. For example, if the digital information is music, the content list may, for example, be the titles of songs or the names of the singers or composers.

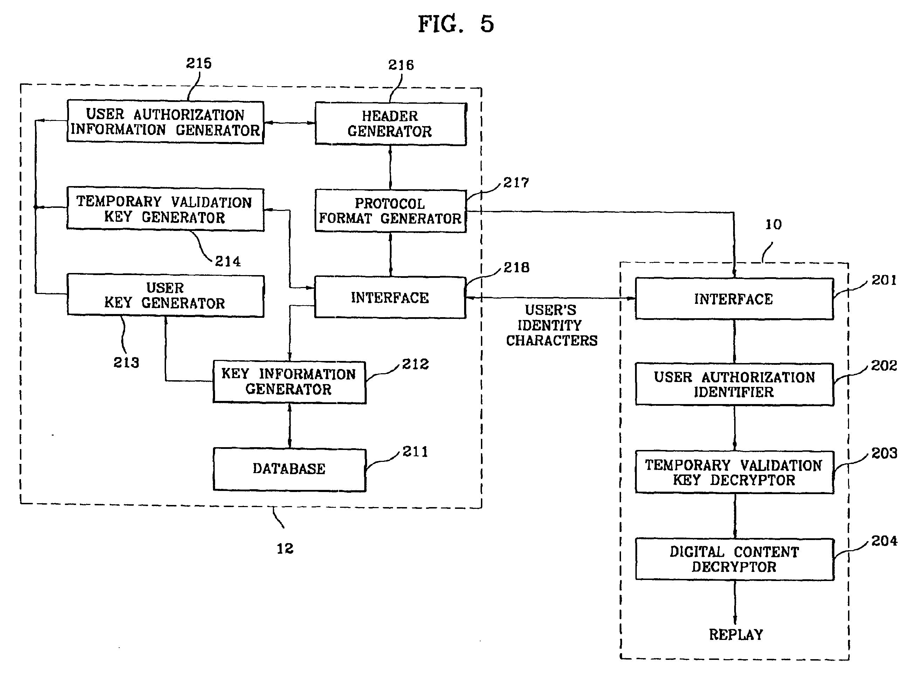

Figure 5 is a block diagram showing the detailed functional structure of the digital cryptograph of Figure 1, with the functional structure of and the interrelation between the service server and the terminal unit shown. Terminal unit 200 may be functionally constructed with an interface 201, a user authorization identifier 202, a content encryption key decryptor 203, and a digital content decryptor 204. Interface 201 receives the key information that has been generated by service server 210 in dependence upon the user's identity characters. User authorization identifier 202 obtains the user's key after reading the header of the copyright protection protocol received from service server 210, and then determines whether the user is authorized to receive digital information by analyzing the user's authorization information with the user's key that has been generated. Content encryption key decryptor 203 decrypts the content encryption key by using the user's key provided by user authorization identifier 202. Digital content decryptor 204 decrypts the encrypted digital information received with the copyright protection protocol by using the content encryption key decrypted by content encryption key decryptor 203.

Service server 210 may be constructed with an interface 218, key information generator 212, a user key generator 213, a content encryption key generator 214, a user authorization information generator 215, a header generator 216, and a protocol format generator 217. Interface 218 receives the identity characters received from terminal unit 200. Key information generator 212 determines whether the identity characters received by interface 218 exist among the sets of identity characters belonging to registered subscribers that is stored in database 211, and then generates the key information. User key generator 213 generates the user's key by applying the key information to the key generation algorithm. The content encryption key generator 214 generates the content encryption key when the user accesses service server 210 through interface 218 and requests some item of digital information. User authorization information generator 215 generates the user's authorization key information by encrypting the content encryption key with the use of the user's key generated by user key generator 213 and then using the user's key and the encrypted content encryption key. Header generator 216 generates a header for the copyright protection protocol by using the user's authorization information and additional information necessary for encryption. Protocol format generator 217 generates the copyright protection protocol by adding the encrypted digital information to the header generated by header generator 216.

The operation of the digital content cryptograph that is functionally illustrated by Figure 5 contemplates that when the user transmits his, or her, identity characters together with a request to receive digital information from service server 210, the identity characters are received by service server 210 through the interface 218 and applied to key information generator 212. Key information generator 212 makes a determination of whether an identical set of identity characters exists among the identity characters of subscribers that are registered within the memory of database 211. Based upon the result of that determination, key information generator 212 either generates new key information that corresponds to the identity characters and applies that new key information to user key generator 213 or transmits to user key generator 213 the registered key information for the user that has been read from database 211.

User key generator 213 generates the user's key by applying the key information to the key generation algorithm, and then finishes the user's key to user authorization information generator 215. Content encryption key generator 214 generates the content encryption key in response to the user access signal that is input through interface 218, and inputs the content encryption key to user authorization information generator 215. User authorization information generator 215 determines, as, for example, by calculation, a hash value by applying the user' key to the hash algorithm, then encrypts the content encryption key by using the user's key. Generator 215 generates the user's authorization information from a set of the hash value and the encrypted content encryption key. The user's authorization information furnished by generator 215 is applied to header generator 216, which adds the user authorization information to the header and then provides the header to protocol format generator 217. Protocol format generator 217 forms the copyright protection protocol format by adding the encrypted digital information to the header and then transmits the copyright protection protocol to the user's terminal unit 200.

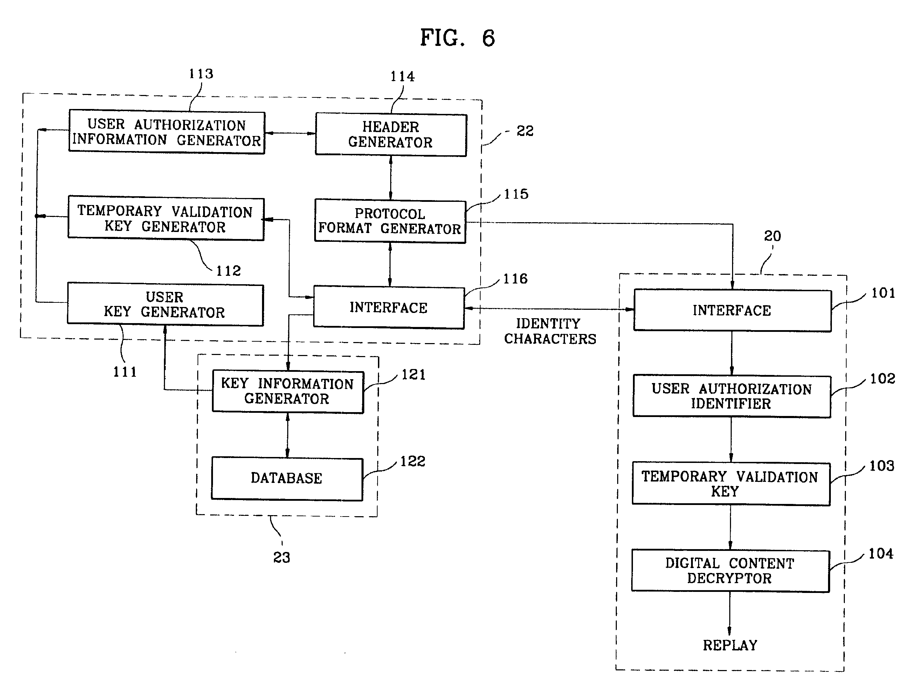

Figure 6 is a block diagram showing the detailed functional structure of the digital cryptograph of Figure 3, with the functional structure of and the interrelation between service server 110, host server 120 and terminal unit 100 being schematically shown. Key information generator 111 and database 122 belong to host server 120. Also, user key generator 111, interface 115, content encryption key generator 112, user authorization information generator 113, header generator 114, and protocol format generator 114 belong to service server 110. The functional operation of these components is the same as is described in the discussion about the embodiment represented by Figure 5.

The illustration of the present invention in the foregoing paragraphs was made mostly by reference to the user of a personal computer. The principles discussed however, may be applied to any kind of device equipped with a communication program and a decryption algorithm.

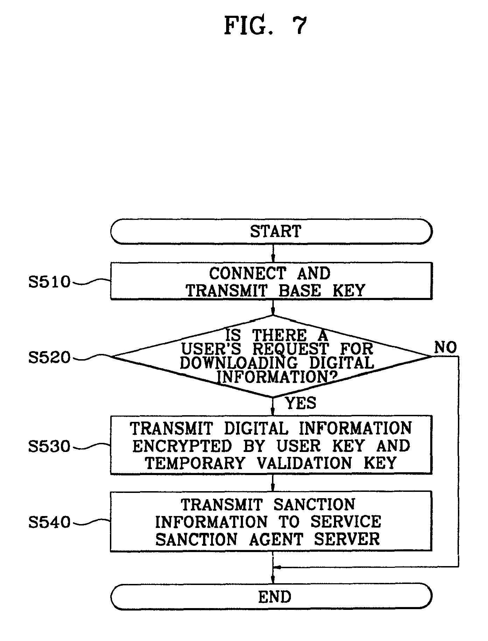

Figure 7 is a flow chart illustrating the operation of service server 22 shown in Figure 3, when digital information is furnished to a user who was previously unregistered with the database of subscribers maintained by service server 22. Service server 22 can be accessed from the terminal unit 20 with the network access program. When the user transmits his, or her, identity characters, service server 22 identifies whether that user is registered by comparing those identity characters with the identity characters of registered users that is maintained by the database. If this user is determined to be registered, no additional key information is generated by the key information generator. If those identity characters are determined, however, to not exist in the database of host server 22, service server 22 will recognize the user as a new member subscriber and proceed to implement a membership registration of this user. If the user completes the process of membership registration, service server 22 receives the key information from host server 23 and then in step S5IO transmits the key information to terminal unit 20 in response to the user's request. This key information generated in response to the identity characters will be maintained valid unless the user requests the cancellation of his membership.

After step S5IO, step S520 in service server 22 determines whether the user's request signal for downloading the digital content has been received from terminal unit 20. If the request signal for downloading is determined in step S520 to have been received, during step S530 service server 22 generates the user's key by using the key information, encrypts the content encryption key by using the user's key, and then creates the header by using the user's key and the encrypted content encryption key. In step S530, service server 22 also generates the copyright protection protocol by adding the encrypted digital content to the header and transmits the protocol to terminal unit 20 of the user. After transmitting the digital content to the user, during step S540 service server 22 transmits the service fee information for the cost incurred by the user in obtaining the digital information, to service sanction agent server 24 in order to add to the user's account stored service the fee information. Service sanction agent server 24 then charges the user for the digital content fee that he incurred by using system to obtain the digital information that was transmitted to his terminal unit 20.

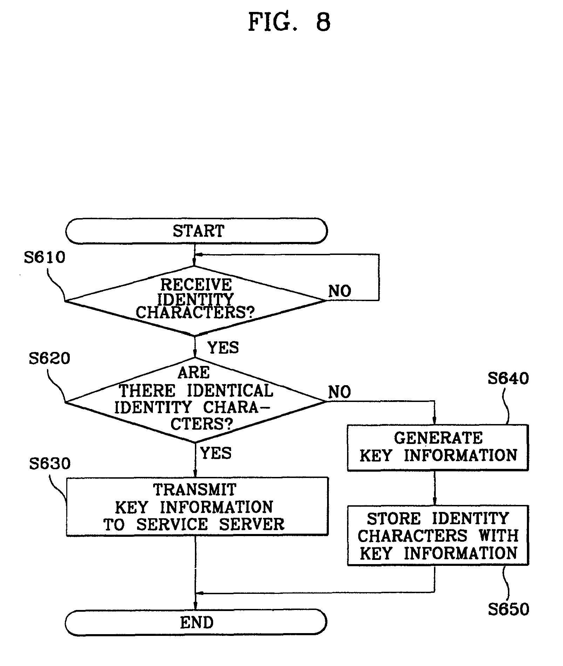

Figure 8 is a flow chart illustrating the operation of the host server shown by Figure 3. In step S610, host server 23 determines whether the identity characters have been received from terminal unit 20. When host server 23 makes a determination that the identity characters have been received, in step S620, those identity characters are compared with the identity characters stored in the database of host server 23 in order to determine whether an identical set of identity characters exist within the database. After step S620, if a determination has been made that an identical set of identity characters is already stored within the database, then during step S630 the corresponding key information stored with those identity characters is transmitted to service server 22. If a determination is made that no identical set of identity characters has previously been stored within the database, in step S640 the key information for the new user is generated and, in step S650, is stored with the identity characters of the new user.

Typically, step S510 is performed by the service server 22 and steps of S610 through S650 are carried out by host server 23 when the cryptograph is configured with separate service server 22 and host server 23, as is shown in Figures 3 and 4. When, as is shown in Figures 1 and 2, only a single service sever 12 is provided, service server 12 integrally performs these steps in order to generate the key information corresponding to the user's identity characters and then transmits the key information that is generated to terminal unit 20 of the user; steps are not specifically described since the processes can be easily inferred from Figures 7 and 8.

When provided with the key information together with the digital information requested by the user, terminal unit 10, 20 decrypts the key information and the digital information through the stored decryption algorithm and, at the same time, outputs the decrypted digital information to the either external or internal audio output devices (e.g., speakers or earphones) in order to render the decrypted digital information audible to the user. Therefore, when illegal copying of digital information from terminal unit 10, 20 to some other terminal unit occurs, the absence of the key information stored within that other terminal unit will disable the process and prevent the encrypted digital information from being replayed and heard.

When a registered user wants to provide another person with digital information obtained by the user from the service server 10, 20, the identification characters of that other person are stored with the identification characters of the registered user. In that situation, the encrypted digital information is decrypted and replayed with the former identification characters as well as with the identification characters of the other person. The fee incurred in exchange for the digital information provided would be paid by the user registered with service server 22.

In the functional sense, this digital content cryptograph serves as an encryption and decryption apparatus in the practice of the present invention; the cryptograph may be divided broadly into a device encrypting digital information and a device decrypting the encrypted digital information.

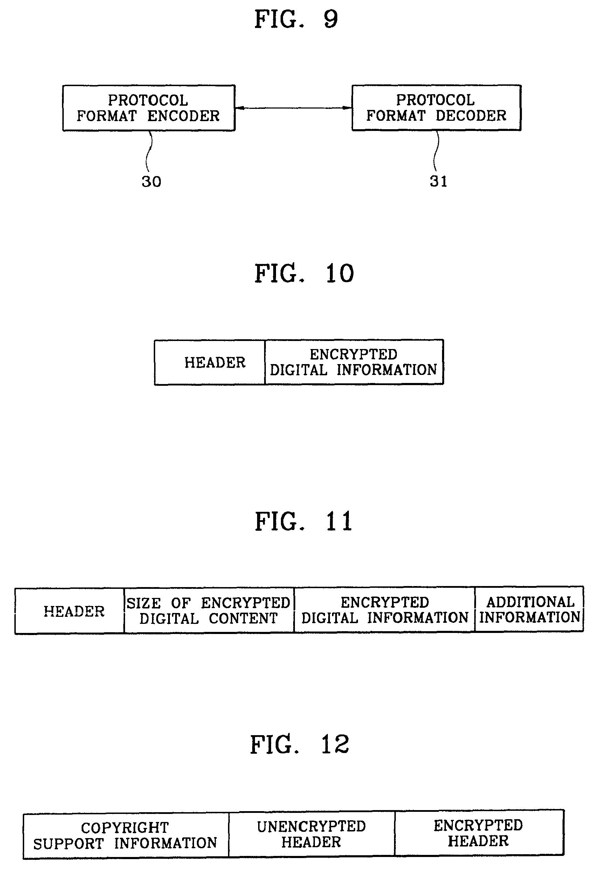

Figure 9 is a schematic block diagram showing the functional structure of the digital cryptograph functioning according to the principles of the present invention. The digital cryptograph of the present invention may be summarized as protocol format encoder 30 operationally connected to protocol format decoder 31. Protocol format encoder 30 generates the copyright protection protocol format containing the encrypted digital information, together with a header including the information necessary for encrypting and decrypting the digital information. Protocol format decoder 31 decrypts and replays the encrypted digital information received in the copyright protection protocol format from protocol format encoder 31, in accordance with the header information from the protection protocol format.

More specifically, protocol format encoder 30 generates the user's key by using the key information generated in correspondence with the user's identity characters and the key generation algorithm. Then protocol format encoder 30 generates the header to which the user's authorization information with the encrypted content encryption key is added by using the user's key and a hash value of the user key. Protocol format encoder 30 also generates the copyright protection protocol format by adding the digital information that has been encrypted with the content encryption key to the header.

Protocol format decoder 31 receives the copyright protection protocol format transmitted by protocol format encoder 30, generates the *user* key by using the key information, and decrypts the encrypted digital content by using the content encryption key after decrypting the content encryption key by using the user's key when protocol format encoder 30 has identified the user of the terminal unit to be authorized. Indication of whether the user is authorized, as a subscriber registered with the database maintained by the service server, or the host server, is provided by the user's authorization information obtained by protocol format decoder by employing the user's key to determine whether the user is authorized to receive, decode and use the digital information.

Operation of the protocol format processing system will be described in detail by now turning to Figures 10 through 16. When the user selects the digital information that he, or she, wants to obtain, the digital cryptograph of the present invention arranges the digital information into the protocol format described in greater detail in the following paragraphs, and then transmits the protocol format to the terminal unit of the user.

Figure 10 is an illustration of one protocol format as applied to the practice of the present invention. The format of one protocol for protecting the copyright of digital information to be transmitted by a service server, may be arranged with a header that includes information for encrypting the digital information and material that explains the digital information, and an encrypted digital content field. Referring additionally now to Figure 5, to understand the structure of the header recall that the digital information requested by the user is encrypted partly by the user key and the content encryption key so as to prevent replay of the digital information in the absence of the key information, such as when the encrypted digital information is obtained by another entity.

Figure 11 illustrates another embodiment for the protocol format, alternative to that shown by Figure 10, with the copyright protection protocol including additional fields that may be optionally added. A field for indicating the size of the encrypted digital information may be inserted between the header and the encrypted digital content field; preferably the size of the encrypted digital information is the same as the size of the unencrypted digital content field. Also, an additional information field may be added to the rear end of the encrypted digital content field in order to define the encrypted digital information for the convenience and easy understanding by the user. If the digital information is, for example, a musical song, the additional information could be various related information such as the name of the singer, title of the song, the playing time, the title of the album, the publisher of the album, the publication date of the song, and if the digital information is a musical video, the additional information could include the name of the associated motion picture.

The additional information field may be arranged in a sequence with the header and the data being arranged in turn, so the format may be expanded regardless of the number of additional items of digital information included within the copyright protection protocol.

Figure 12 illustrates the header field suitable for Figures 10 and 11 more specifically, with a copyright support information field, an unencrypted header field and an encrypted header field. The copyright support information field includes a copyright support code that shows whether the digital information provided by the digital content provider supports the copyright. If the copyright support code exists in the copyright support information field, the digital information being provided to the user is recognized as being eligible to be encrypted, and then decrypted by the user for replay. Otherwise, if the copyright support code is absent from the copyright support information field, the digital information is identified as not being eligible to be unencrypted (e.g., due to the unregistered status of the recipient of the digital information) and the decryption process is terminated in order that the digital information can only be replayed without decryption (i.e., replayed in its encrypted state as noise).

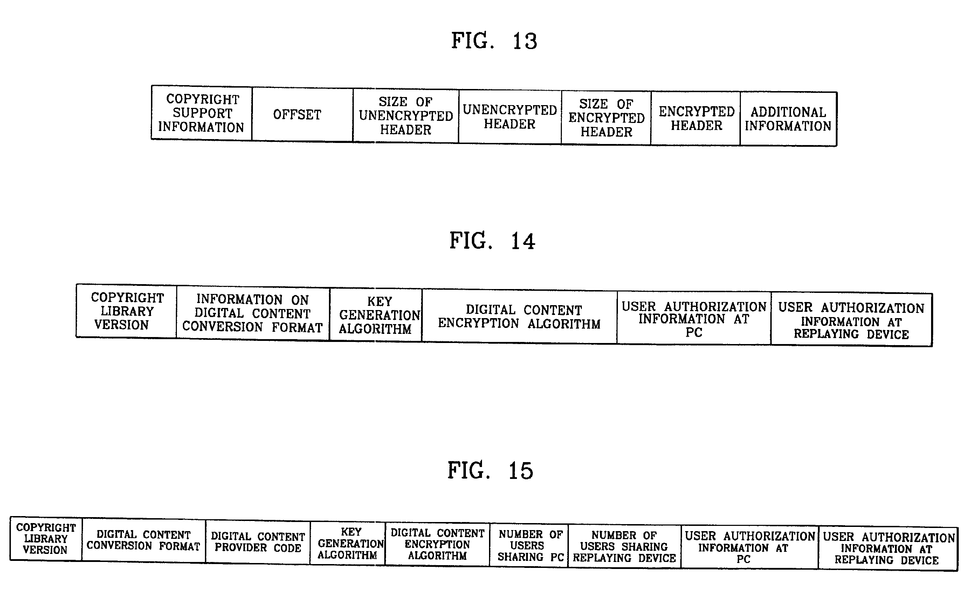

Figure 13 illustrates another embodiment of a header field alternative to that of Figure 12. The header field of Figure 13 corresponds to the optionally added fields of the protocol format illustrated by Figure 11. An offset field and a field for indicating the size of the unencrypted header may be inserted between the copyright support information field and the unencrypted header field. The offset field provides information about the position of the additional information field; this enables the additional information field to be accessed without analysis of the header. Also, a field for indicating the size of the encrypted header is provided in the sequence prior to the encrypted header field.

Figure 14 illustrates the format of an unencrypted header field suitable for the header fields of the alternatives shown by Figures 12 and 13. The unencrypted header field may be arranged with a copyright library version field, a digital conversion format field for indicating the type of the digital conversion format a key generation algorithm field for indicating the information on the key generation algorithm, a digital content encryption algorithm field for indicating the information on the digital content encryption algorithm, a field for indicating the user's authorization information at the computer of the user's terminal unit, and a field for indicating the user's authorization information at the replay device. The digital conversion format field shows which conversion technique was used to convert the digital content into the digital signal. Typical examples of the conversion method are MP3 and AAC. The encryption algorithm field may include a hash algorithm code, key encryption algorithm code, the size of initial vector (IV), and information on initial vector used for encrypting the digital content. The field for indicating the user authorization information at the computer of the user's terminal unit and the field for indicating the user's authorization information at the replay device are the most important components of the header; they serve to identify the user's authorization to use the digital information and increase in proportion to the number of people who share the encrypted digital information.

Figure 15, illustrates another embodiment of the unencrypted header field that is alternative to that shown by Figure 14. This unencrypted header field may optionally include added additional fields, such as an identifier of the information provider and the number of users who are sharing the digital information. The field for indicating the code of information provider may be inserted between the digital content conversion format field and the key generation algorithm field. To the rear end of the digital content encryption algorithm field may be added a field indicating the number of users sharing the computer at the terminal unit, and a field indicating the number of users sharing the replay device.

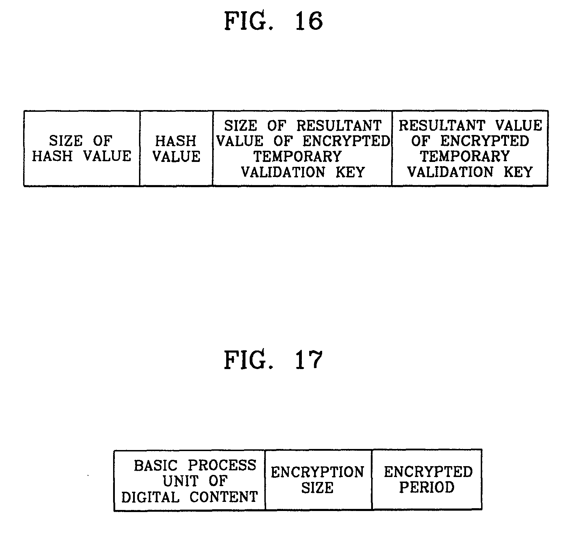

Figure 16 illustrates the detailed structure of the user authorization information fields suitable for the unencrypted header fields shown in Figures 14 and 15. The user authorization information fields at the computer of the terminal unit as well as at the replay device, may be arranged with a first field that indicates the size of hash value generated by the hash algorithm, a second field that indicates a hash value for the user's key, a third field that indicates the size of the resultant value of the encrypted content encryption key created by the key encryption algorithm, and a fourth field that indicates the resultant value of the encrypted content encryption key.

Figure 17 illustrates the details of an arrangement of an encrypted header that is suitable for use in the header field shown by Figures 12 and 13. The encrypted header field may be arranged with a first field that indicates the basic process unit of the digital content of the information to be furnished to the user, a second field that indicates the number of encrypted bytes and a third field that indicates a repetition period of the encrypted digital content. The basic process unit of the digital information and the number of the encrypted bytes resulting from encryption of the digital information may be assigned by the information provider; however, the basic process unit and the number of encrypted bytes are likely to be set to basic values by a basic algorithm by reference to the processing speed of the terminal unit and a memory that stores data for the microprocessor based terminal unit.

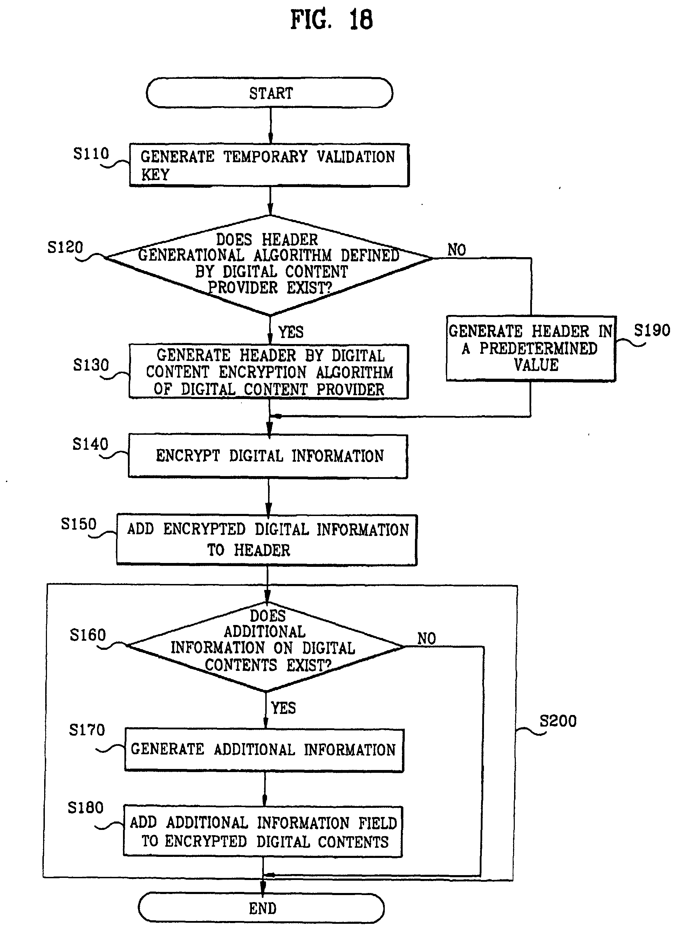

Figure 18 is a flow chart illustrating one method for generating a protection protocol during the practice of the present invention. when the digital content request signal is received from the user, the content encryption key is generated in step S110. Then, determination is made of whether the header generation algorithm defined by the digital content provider exists when the content encryption key is generated in step S120. If the header generation algorithm is determined during step S120 to be available to the service server, then in step S130 the header is generated with the header generation algorithm defined by the digital content provider. If the determination establishes that the header generation algorithm is unavailable to the service server, the header is created in step s190 with a basic value.

After the header is created at either step S130 or s190, the digital information requested by the user is encrypted during step S140 and the encrypted digital information is then added during step S150 to the header generated during either step S130 or S190. When additional information is to be provided to the user, a determination is made in step S160 of whether the additional information about the digital information combined with the header exists. If, during step S160 the additional information is determined to exist, the additional information field is generated during step S170 and during step S180, added to the rear end of the encrypted digital content in order to form the copyright protection protocol. The copyright protection protocol is then transmitted to the user who earlier made the request for the digital information. The additional information is optionally added to the digital information by the information provider when the provider would like to make some additional explanation about the digital content to the user. The additional information processing step of S220 may be added selectively by the service provider.

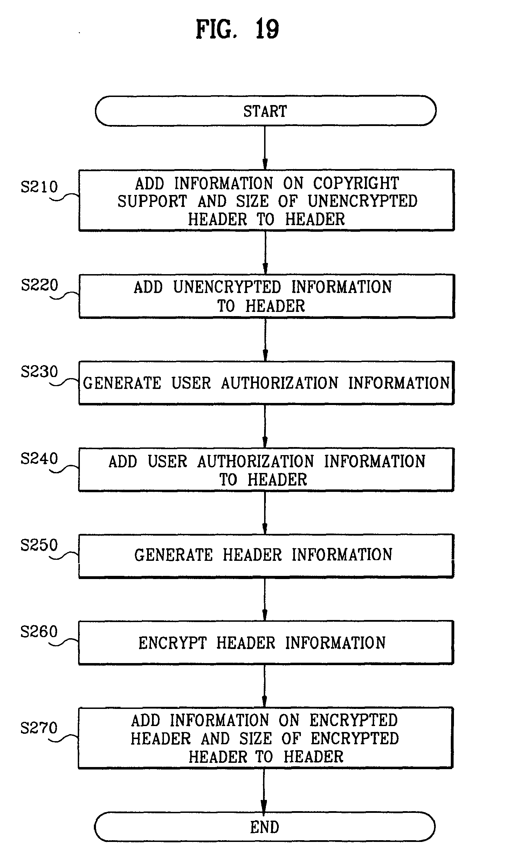

Figure 19 is a flow chart illustrating the method of generating the header applied to Figure 18.

The copyright support information field, describing whether the digital content provided is under the protection of copyright, and a field for indicating the size of unencrypted header are generated and added to the header (5210). The unencrypted header field is also generated and added to the header (s220), which field includes the version information, a type of music, the code of service provider supporting the copyright, hash algorithm, key generation algorithm, and digital content encryption algorithm.

If the additional information field of the digital content exists, information on the starting point of the additional information field can be also added to the header.

At step of S220 that a part of the header part is constructed, the user authorization information is generated using the key information the user has and the generated user authorization information is added to the header (S240). Following the step of S240, the encrypted header information is generated (S250).

The header information includes information necessary for encryption of the digital content such as size of the encrypted block, encryption period and encrypted frame unit, etc. The header information is also generated to include the hash value by applying the whole header to the hash algorithm, with which value the change of header information can be determined.

The header information generated at the step of S250 is encrypted (S260) and then the information on the encrypted header and the size of the encrypted header is added to the header (S270), so that generated is the header added to the front end of the encrypted digital content transmitted to the user.

In case the encryption algorithm provided by the digital content provider exists (S260), the header information is encrypted by the encryption algorithm and the content encryption key. Otherwise the header information is encrypted by the basic algorithm and the content encryption key.

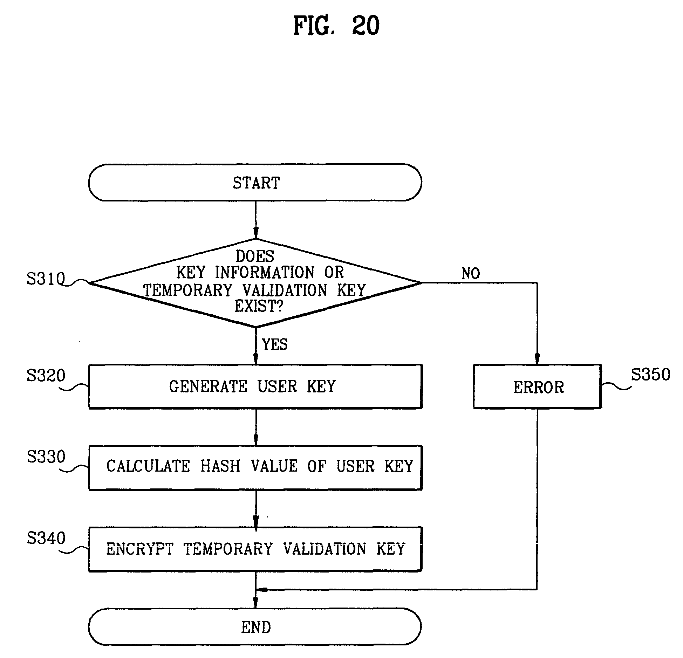

Figure 20 is a flow chart illustrating the method of generating the user authorization information applied to Figure 19, which describe in more detail the method of generating the encryption key information at the step of s230 of Figure 19.

It is determined whether the key information or the content encryption key exists (S310). The user key is generated by applying the key information to the key generation algorithm when it is determined that the key information and the content encryption key exist at the step of S310 (S320).

A hash value is calculated by applying the user key generated at the step of S320 (S330) to hash algorithm, and then the content encryption key is encrypted using the key encryption algorithm and the generated user key (S340). At the determination step of S310, the process is terminated with output of message of error when the key information or the content encryption key is determined not to exist.

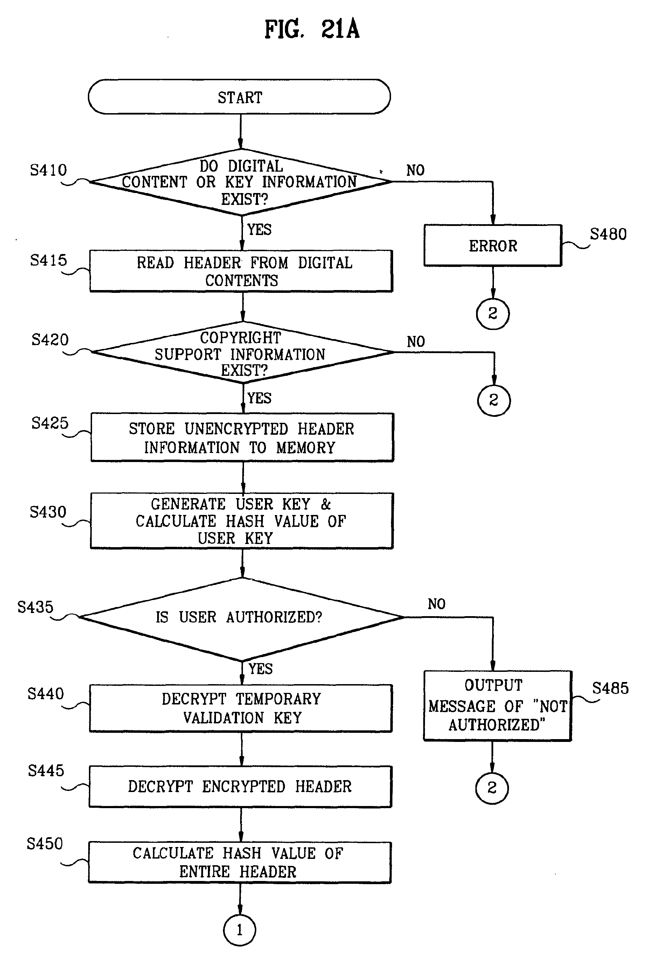

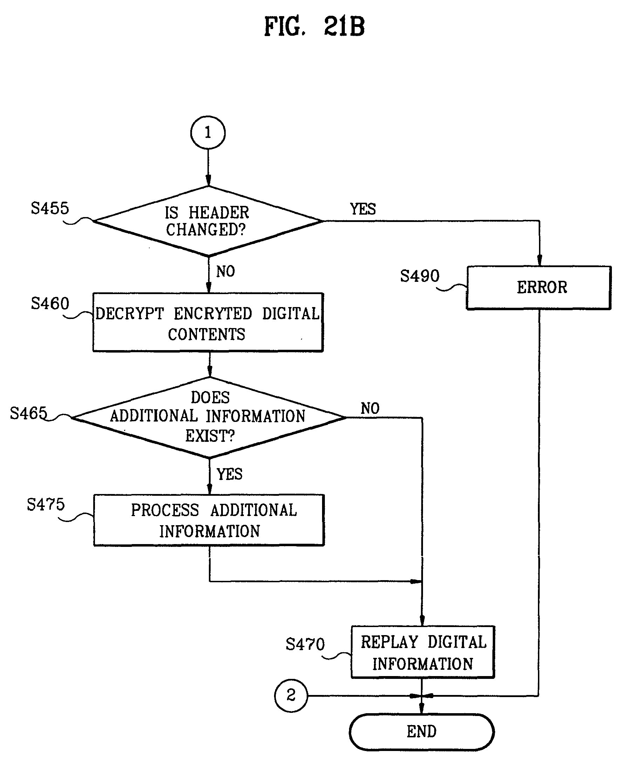

Figure 21 is a flow chart illustrating the method of decrypting and replaying the encrypted digital content according to the present invention.

First, it is determined whether the key information or the digital content received from the digital content provider exists (S410). The header of the digital content is read when either the digital content or the key information is determined to exist (S415), and the process is recognized to be an error and terminated when the digital content and the key information do not exist (s480) .

It is determined whether the header read at the step of S415 includes the copyright support code, that is to say, whether the digital content supports the copyright (S420).

If the copyright support code is determined to exist, the digital content are recognized to be protected by copyright and the read unencrypted header information is stored at a memory as a predetermined variable (S425).

If the copyright support code is determined not to exist, that is, the digital content are not protected by copyright, the digital content is recognized to be an error in the decryption process. Then the decryption process is no longer carried out and the received digital content are decoded and output, not passing through decryption process.

When the digital content is determined to be supported by copyright, the user key is generated using the key information and then the hash value of the generated user key is calculated (S430).

It is determined whether the calculated hash value of the user key is identical with a hash value of the user key in the header (S435).

When the calculated hash value of the user key is determined to coincide with the hash value of the user key in the header, the user is recognized to be authorized and the content encryption key is decrypted using the user key (s440). The encrypted header is decrypted using the decrypted content encryption key (s445). The hash value of entire header, which is served as a reference value for determination the change of entire header, is calculated by applying the entire header to hash algorithm (s450).

At the determination step of S435, a message such as "Not authorized" is output and the entire digital content decryption process is terminated when the calculated hash value of the user key is determined not to be identical with the hash value of the user key in the header.

The change of the header is determined according to hash value of the entire header (S455). In case the header is determined not to be changed, the encrypted digital content are decrypted (S455).

It is determined whether additional information exists (5465). The digital content are replayed if the additional information is not determined not to exist (S470) The additional information is processed and then replayed when the additional information is determined to exist (S475).

When the header is determined to be changed at the step of S455, the user is recognized not to be authorized so that the decryption process is terminated for the user not to replay the digital content (S490).

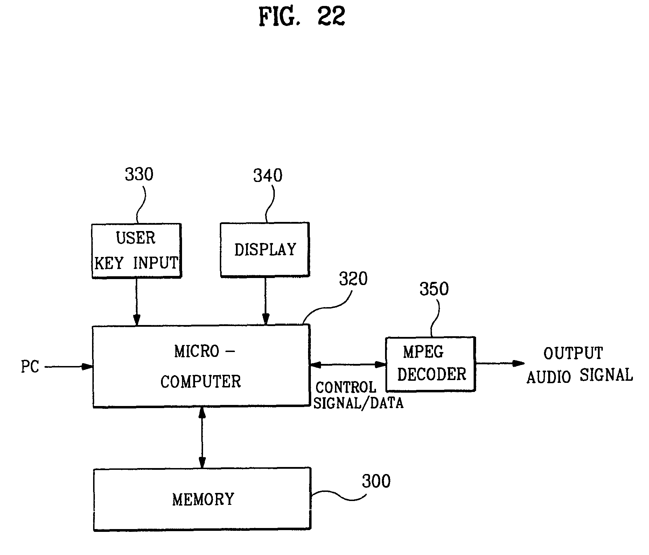

Figure 22 illustrates schematically the structure of the replaying device applied to Figure 1 and Figure 3.

Memory 300 includes a driving algorithm for the entire system and a plurality of algorithms for decrypting the encrypted digital content. Memory 300 stores in itself the received key information and digital content data in response to the writing signal and outputs the stored key information and digital content data in response to the reading signal. Memory 300 is preferred to be a flash memory.

Microcomputer 320 receives the key information and digital content data to store memory 300, decrypts the encrypted digital content by the algorithm stored in memory 300 and then outputs them according to the key signal input from the user key input device 330. At the same time, it controls display 340 to display the present state of the apparatus.

Microcomputer 320 generates the user key through the user authorization information of the header using the key information stored in memory 300 according to the algorithm, which is also stored in memory 300, when the input digital content are encrypted. Also, microcomputer 320 decrypts the content encryption key included in the user authorization information of the header using the generated user key. The encrypted digital content are decrypted using the decrypted content encryption key to be output.

When the unencrypted digital content are received, microcomputer 320 replays and outputs the digital content without decrypting them. Decoder 350 decodes the digital content output from microcomputer 320 to output audio signal. Decoder 350 is preferred to be an MPEG decoder.

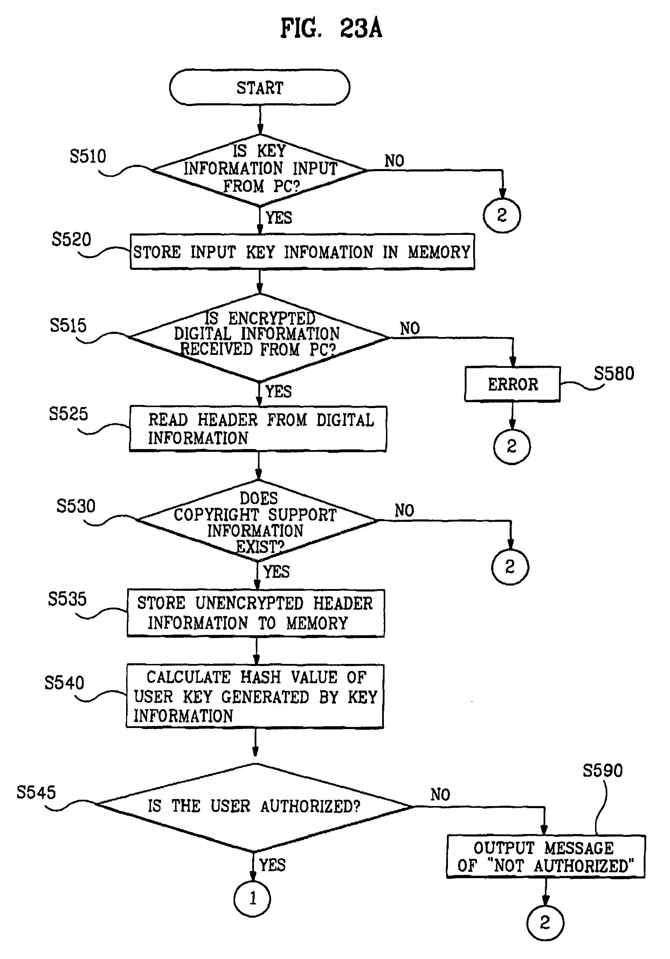

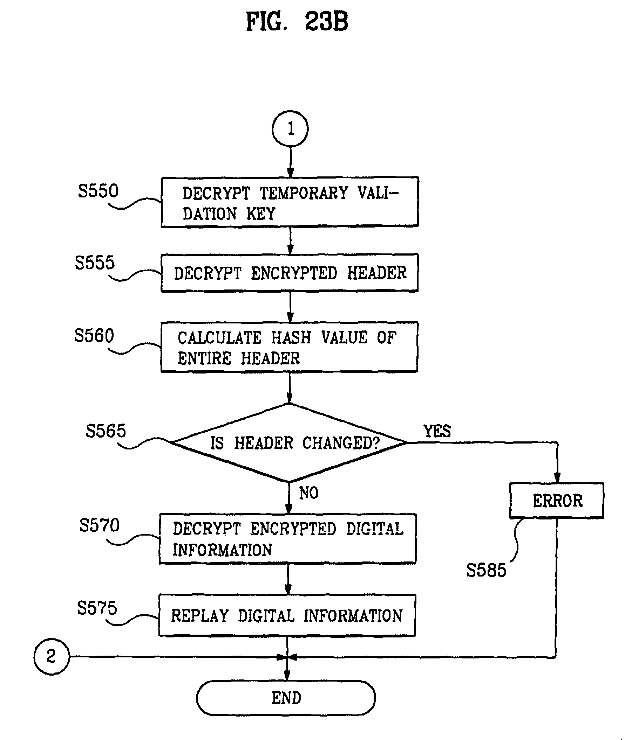

Figure 23 is a flow chart illustrating the method of decrypting the encrypted digital content in case the encrypted digital content are input from PC to the replaying device constructed as in Figure 22. Microcomputer 320 determines whether the key information is input from PC (S510) and stores the input key information in memory 300 when the key information is determined to be input (S515).

After storing the key information in memory 300, microcomputer 320 determines whether the encrypted digital content are input from PC (S520). When the encrypted digital content are determined to be input at the step of S520, microcomputer 320 stores the digital content in memory 300 and then reads the header from the digital content according to the decryption algorithm stored in memory 300 after the transmission process is completed (S525). When the encrypted digital content are determined not to be input, they are recognized as an error (S580) and the decryption process is terminated.

Next, microcomputer 320 determines whether the copyright support code exists in the header of the read digital content (s530). If the copyright support code is determined to exist, the digital content are recognized to be protected by copyright and the read unencrypted header information is stored at memory 300 as a predetermined variable (S535). When the digital content is determined to be protected by copyright, microcomputer 320 generates the user key using the key information and the key generation algorithm. Microcomputer 320 calculates a hash value of the generated user key by hash algorithm stored in memory 300 (S540).

Next, microcomputer 320 determines whether the calculated hash value of the user key is identical with a hash value of the user key in the user authorization information of the header (s545). when the calculated hash value of the user key is determined to coincide with the hash value of the user key in the header, the user is recognized to be authorized and the content encryption key is decrypted using the user key (s550). The encrypted header is decrypted using the decrypted content encryption key (S555).

At the determination step of S545, a message of "Not authorized" is output and the decryption process is terminated when the calculated hash value of the user key is determined not to be identical with the hash value of the user key in the header. A determination is made in accordance with the hash value of the entire header whether the entire header is changed in order to determine whether the user is authorized to decrypt and replay the digital content (S455). The hash value is calculated by applying the entire header to hash algorithm (S560).

The change of the entire header is determined according to whether the hash value of the header calculated at the step of S560 is identical with a hash value of the entire header stored in the header (S565).

In case the header is determined not to be changed, that is, the hash value of the entire header calculated at the step of S560 is identical with the hash value of the entire header stored in the header, the encrypted digital content are decrypted (S570). The additional information is processed and then replayed in case the additional information does not exist (S575).

When the header is determined to be changed at the step of S565, that is, the calculated hash value of the entire header is not identical with the hash value of the entire header stored in the header, the user is recognized not to be authorized so that the decryption process is terminated for the user not to replay the digital content (S585).

In the present invention, the supplied encrypted digital information may not be replayed without the use of the decoding algorithm and the key information. Therefore, when the digital information is illegally copied, it may not be replayed. This discourages illegal copying, distribution, publication and unauthorized distribution, and minimizes the risk of significant losses for the information provider to the digital information that may be caused by illegal copying and unauthorized distribution. Moreover, this system encourages the user to acquire the digital information via a legitimate route.

While this invention has been described in connection with what is presently considered to be the most practical and preferred embodiment, it is to be understood that the invention is not limited to the disclosed embodiments, but, on the contrary, is intended to cover various modifications and equivalent arrangements included within the scope of the appended claims.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. A digital content encryption and decryption apparatus of a digital content transmission system comprising:
a protocol format generator (30) located at a server (22) location, said protocol format generator (30) generating a copyright protection protocol; and
a protocol format decoder (31) located at said terminal unit (10,20), said protocol format decoder having a decryption algorithm (31);
**characterised by**:
the protocol format generator (30) generating the copyright protection protocol by utilizing key information generated in response to identity characters of a user transmitted to said server (22) location from a terminal unit (10,20), said copyright protection protocol including a header and digital contents, said digital contents being encrypted, said header having information for decrypting and explaining the digital contents; and
the protocol format decoder storing the key information generated by the protocol format generator (30), said protocol format decoder decrypting and replaying the digital contents according to the stored key information and the information of the header received from the protocol format generator (30).

2. The apparatus of claim 1, wherein the protocol format generator (30) generates a user key by adding the key information to a key generation algorithm and calculates a hash value by adding the user key to a hash algorithm, said protocol format generator (30) encrypting a temporary validation key by using the user key, said header including user authorization information with the hash value and the encrypted temporary validation key, said key information being formed to correspond to said identity characters of the user.

3. The apparatus of claim 1, wherein the protocol format decoder generates a user key by adding the stored key information to a key generation algorithm and decrypts a temporary validation key, transmitted within said copyright protection protocol, by using the user key, said protocol format decoder decrypting the encrypted digital contents with the temporary validation key, said key information being formed to correspond to said identity characters of the user.

4. A digital content encryption and decryption apparatus of a digital content transmission system comprising:
a protocol format generator (30) located at a server (22) location, said protocol format generator (30) generating a copyright protection protocol; and
a protocol format decoder for copyright protection located at a terminal unit (10,20);
**characterised by**:
the protocol format generator (30) generating the copyright protection protocol by generating key information using random numbers, said key information corresponding to identity characters of a user transmitted to said server (22) location from a terminal unit (10,20), said copyright protection protocol including a header and encrypted digital information added to the header;
said protocol format generator (30) applying said key information to a key generating algorithm to generate a user key utilized to generate a temporary validation key, said temporary validation key being encrypted to generate user authorization information, said header including said user authorization information;
said protocol format decoder receiving and storing said key information and receiving said copyright protection protocol; and
said protocol format decoder generating a second user key in response to the received key information, analyzing said user authorization information in response to said second user key to determine whether the user is authorized to receive said encrypted digital information, and when said user is authorized to receive said encrypted digital information, utilizing said second user key to decrypt said temporary validation key from said user authorization information, the decrypted temporary validation key being used to decrypt said encrypted digital information.

5. The apparatus of claim 4, wherein the protocol format decoder generates said second user key by adding the stored key information to a second key generation algorithm.

6. A copyright protection protocol for protecting copyright of digital contents, **characterised by** the protocol including a header and the digital contents, said digital contents being encrypted, said header including key data for decrypting the digital contents, said key data being randomly generated in response to identity characters of a user transmitted to a host server from a terminal unit (10,20), wherein said terminal unit (10,20) receives said protocol from said host server and replays said digital contents by decrypting the encrypted digital contents in response to the key data.

7. The protocol of claim 6, further comprising a field for indicating the size of the encrypted digital contents, and an additional information field.

8. The protocol of claim 6 or 7, wherein the header comprises a copyright support field for indicating whether the digital contents are under copyright protection, an unencrypted header field, and an encrypted header field.

9. The protocol of claim 6 or 8, wherein the header comprises a copyright support field for indicating whether the digital contents are under copyright protection, an unencrypted header field, a field for indicating the size of the unencrypted header field, an encrypted header field, and a field for indicating the size of the encrypted header field.

10. The protocol of claim 9, wherein the unencrypted header field comprises a copyright library version field, a digital content conversion format field, a key generation algorithm field, a digital content encryption algorithm field, a field for indicating user authorization information at a personal computer, and a field for indicating user authorization information at a replaying device.

11. The protocol of claim 10, wherein the field for indicating user authorization information at the personal computer and the field for indicating user authorization information at the replaying device comprise a field for indicating a hash value of a user key, and a field for indicating the size of the hash value generated by a hash algorithm, a field for indicating a resultant value of an encrypted temporary validation key, and a field for indicating the size of the resultant value of the encrypted temporary validation key, respectively.

12. The protocol of claims 9, 10 or 11, wherein the unencrypted header field comprises a copyright library version field, a digital content conversion format field, a field for indicating the code of a digital content provider, a key generation algorithm field, a digital content encryption algorithm field, a field for indicating the number of users sharing a personal computer, a field for indicating the number of users sharing a replaying device, a field for indicating user authorization information at the personal computer, and a field for indicating user authorization information at the replaying device.

13. The protocol of claim 12, wherein the field for indicating user authorization information at the personal computer and the field for indicating user authorization information at the replaying device comprise a field for indicating a hash value of a user key, and a field for indicating the size of the hash value generated by a hash algorithm, a field for indicating a resultant value of an encrypted temporary validation key, and a field for indicating the size of the resultant value of the encrypted temporary validation key, respectively.

14. The protocol format of any of claims 9 to 13, wherein the encrypted header field comprises a field for an encryption algorithm of the digital content, a field for indicating a basic process unit of the digital content, a field for indicating the number of encrypted bytes, and a hash value field for a hash value for determining a state of the entire header.

15. Apparatus for decrypting and encrypting a digital content, comprising:
a terminal unit (10,20) having a decryption algorithm (31), said terminal unit (10,20) transmitting identity characters of a user to a service server;
**characterised by**:
the terminal unit (10,20) receiving and storing key information output from said service server, receiving a protocol including encrypted digital content output from said service server, and decrypting said protocol by using said decryption algorithm (31) and said stored key information; and
said service server having an encryption algorithm, said service server producing said key information in response to said identity characters transmitted from said terminal unit (10,20), transmitting said key information in a header to said terminal unit (10,20), encrypting said digital content by using said key information and said encryption algorithm, and transmitting the encrypted digital content along with said header, as said protocol, to said terminal unit (10,20).

16. The apparatus of claim 15, wherein said terminal unit (10,20) further comprises:
a key generation algorithm responsive to said stored key information for generating a user key, the user key being used for generating and confirming user authorization information, the user key being further used for decrypting a temporary validation key in a user authorization information field of the header, said temporary validation key being used for decrypting said encrypted digital content.

17. The apparatus of claim 16, wherein said terminal unit (10,20) further comprises:
an interface for receiving said key information generated by said service server;
a user authority identifier utilizing said key information for obtaining the user key after reading the header of the protocol received from the service server and identifying whether said user is authorized to receive said digital content by analyzing the user authorization information with the user key;
a temporary validation key decryptor for decrypting said temporary validation key by using the user key obtained by said user authorization identifier; and
a digital content decryptor for decrypting said encrypted digital content by using the temporary validation key decrypted by the temporary validation key decryptor.

18. The apparatus of claim 15, wherein said service server further comprises
a key generation algorithm responsive to said key information for generating a user key, the user key being used for encrypting a temporary validation key generated in response to a user's request, the temporary validation key being used for encrypting said digital content, the user key and the encrypted temporary validation key being used to generate user authorization key information, the header being generated in response to the user authorization key information.

19. The apparatus of claim 18, wherein said service server further comprises:
an interface for receiving said identity characters transmitted from said terminal unit (10,20);
a key information generator for producing said key information in response to said identity characters received by said interface;
a user key generator responding to said key information for generating said user key;
a temporary validation key generator for generating said temporary validation key in response to a user digital content request signal that is input through the interface;
a user authorization information generator responding to said user key for encrypting said temporary validation key to generate user authorization information;
a header generator responding to said user key for generating a header, wherein said header includes said user authorization information; and
a protocol format generator (30) for adding said encrypted digital content to said header to generate said protocol.

20. The apparatus of claim 15, further comprised of a service sanction agent server connected to said service server for receiving from the service server a signal concerning digital content fee responding to the transmission of said digital content requested by said user, and accumulating said digital content fees responding to said signal into a registered user's ID.

21. The apparatus of claim 15, wherein the terminal unit (10,20) having a network access program is connected to a network, public switched telephone network, or a wireless network.

22. The apparatus of claim 18, wherein said service server further comprises a database storing a set of identity characters used by said key information generator for comparison with the user's identity characters in order to determine whether the user is a registered user.

23. The apparatus of claim 15, wherein said protocol is copyright protection protocol.

24. An apparatus for encrypting and decrypting a digital content, comprising:
a terminal unit (10,20) having a decryption algorithm (31), said terminal unit (10,20) transmitting identity characters of a user to a service server;
**characterised by**:
the terminal unit (10,20) receiving and storing a key information output from said service server, receiving a protocol including encrypted digital content output from said service server, and decrypting the encrypted digital content included with said protocol by using said decryption algorithm (31) and said key information;
said service server having an encryption algorithm, said service server transmitting said key information to said terminal unit (10,20) and transmitting said identity characters to a host server, encrypting said digital content by using said key information and said encryption algorithm, and transmitting said protocol to said terminal unit (10,20); and
said host server responding to said identity characters transmitted from said service server for producing said key information, for transmitting said key information to said service server, and for storing a set of user identity characters for comparison to the identity characters transmitted to said host server from said service server.

25. The apparatus of claim 24, wherein said terminal unit (10,20) further comprises:
a key generation algorithm responsive to said stored key information for generating a user key, the user key being used for generating and confirming user authorization information by decrypting a temporary validation key in a user authorization information field of the header, said temporary validation key being used for decrypting said encrypted digital content.

26. The apparatus of claim 25, wherein said terminal unit (10,20) further comprises:
an interface for receiving said key information transmitted from said service server;
a user authority identifier utilizing said key information for obtaining the user key after reading the header of the protocol received from the service server and identifying whether said user is authorized to receive said digital content by analyzing the user authorization information with the user key;
a temporary validation key decryptor for decrypting said temporary validation key by using the user key provided by said user authorization identifier; and
a digital content decryptor for decrypting said encrypted digital content by using the temporary validation key decrypted by the temporary validation key decryptor.

27. The apparatus of claim 24, wherein said service server comprises:
a key generation algorithm responsive to said key information for generating a user key, the user key being used for encrypting a temporary validation key generated in response to a user's request, the temporary validation key being used for encrypting said digital content, the user key and the encrypted temporary validation key being used to generate user authorization key information, the header being generated in response to the user authorization key information.

28. The apparatus of claim 27, wherein said service server further comprises:
an interface for receiving said identity characters transmitted from said terminal unit (10,20) and transmitting said identity characters to said host server;
a user key generator responding to said key information for generating said user key;
a temporary validation key generator, responding to said user's request, for generating said temporary validation key;
a user authorization information generator responding to said user key for encrypting said temporary validation key to generate said user authorization information;
a header generator responding to said encrypted temporary validation key for generating the header, wherein said header includes said user authorization information; and
a protocol format generator (30) for adding said encrypted digital content to said header to generate said protocol.

29. The apparatus of claim 28, wherein said host server comprises:
a key information generator and a database, said database storing said set of user identity characters and corresponding key information, said key information generator checking said data base for user identity characters corresponding to the identity characters transmitted from said interface, said key information generating new key information when it is determined that said database does not include a set of user identity characters corresponding to said identity characters transmitted from said interface and providing the new key information to said user key generator, and when said database does include a set of user identity characters corresponding to said identity characters transmitted from said interface and providing, providing the stored corresponding key information to said user key generator.

30. The apparatus of claim 24, further comprising:
a service sanction agent server connected to said service server for receiving from the service server a signal concerning a digital content fee responding to transmission of digital content requested by a user, and accumulating the digital content fees, in response to said signal, into a memory corresponding to a registered user's ID.

31. The apparatus of claim 24, wherein said terminal unit (10,20) is connected to a network, public switched telephone network, or wireless network, said terminal unit (10,20) having a network access program to access said service server.

32. The apparatus of claim 24, wherein said host server includes a database storing said set of identity characters used by a key information generator for comparison with the identity characters transmitted to said host server from said service server in order to determine whether the user is a registered user.

33. The apparatus of claim 24, wherein said protocol is a copyright protection protocol.

34. A data storage medium having recorded thereon encrypted digital contents;
**characterised by**:
the encrypted digital contents having a header including key data decrypting the digital contents.

35. The data storage medium of claim 34, wherein the header comprises a further field for indicating the size of the encrypted digital contents, and an additional information field.

36. The data storage medium of claim 34 or 35, where in the header comprises a copyright support field for indicating whether the digital contents are under copyright protection, an unencrypted field, and an encrypted header field.

37. The data storage medium for claim 34, wherein the header comprises a copyright support field for indicating whether the digital contents are under copyright protection, and unencrypted header field, a field for indicating the size of the unencrypted header field, an encrypted header field, and a field for indicating the size of the encrypted header field.
